# EUROPEAN PATENT SPECIFICATION

(11) **EP 1 400 173 B1**
(45) Date of publication and mention of the grant of the patent: **29.04.2009**
(21) Application number: 03077874.0
(22) Date of filing: 12.09.2003
(51) Int. Cl.: A21C 3/00

(54) **Unit for the formation of a regular and uniform continuous long loaf of bread dough**
Einheit zum Bilden eines regelmässigen und gleichmässigen Brotteigstreifens
Unité pour la formation d'une bande régulière et uniforme de pâte à pain

(30) Priority: 17.09.2002 IT MI20021969
(43) Date of publication of application: 24.03.2004
(73) Proprietor: Bertuetti, Gastone, 25123 Brescia (IT)
(72) Inventor: Bertuetti, Gastone, 25123 Brescia (IT)
(74) Representative: Mittler, Enrico

(56) References cited:
- EP-A- 0 570 113
- US-A- 2 756 459
- US-A- 4 171 198
- US-A- 4 453 906
- US-A- 5 466 143

## Description

The present invention concerns a unit for the formation of a regular and uniform continuous long loaf of bread dough.

There are known dividing machines for bread dough in which a mass of bulk bread dough fed into a hopper falls at pre-established time intervals on a conveyor belt beneath in order to give origin to a distinct long loaf of bread dough that is carried by the conveyor belt and is then separated into single portions or doses having pre-established weight.

In such machines the separation of the single long loaf from the bulk mass is entrusted to a cutting blade that opens and closes the output mouth of the hopper at pre-established time intervals or after a suitable weighting device associated with the conveyor belt has detected the dropping of a determined weight of dough.

A defect with such known machines consists in that the single long loafs turn out to have rather irregular and variable shape, and therefore so are the single subsequently separated portions. In addition the dough of the long loaf gets stressed by its friction with the cutting blade above it in closing position.

EP-A-0 570 113 discloses an apparatus for dividing bread dough which comprises a dough-cutting member provided with a saw blade, two dough-supporting members and a drive means for reciprocating the saw blade.

US-A-4 453 906 discloses an apparatus for continuously discharging dough to produce a web of dough sheet. Dough supplied in a hopper is advanced by a conveying mechanism serving as the moving bottom wall of the hopper towards an exit which is provided at a lower portion of a side wall of the hopper. A cutter is provided at the upper end of the exit so as to be directed inwardly of the hopper.

Scope of the present invention is now to provide a unit that, starting from a bulk mass of bread dough, allows the formation of a continuous long loaf of bread dough having regular and uniform shape.

According to the present invention such scope is attained by means of a unit as defined in claim 1.

In this way, from the formation unit a single continuous long loaf of bread dough comes out that has not been subject to stress due to the friction with the cutting blade, but on the contrary has been accompanied by it toward the outlet, and turns out to be levelled off both on the bottom as well as on top. In addition it can be very levelled off even laterally if, as preferred, the horizontal conveyor belt is flanked by two vertical side conveyor belts, that move together with the horizontal belt thus forming a collection space that has flat side and bottom walls and is also made flat on top by the alternative motion of the cutting blade.

The continuous long loaf of bread dough in output thus turns out to be regular and uniform in shape, suitable for the subsequent division into portions that are in turn regular and uniform.

A preferred embodiment of the unit according to the invention also provides, inside the hopper, one or more dough divider septa that separate the bulk mass of dough inside the hopper into several parts that follow one another in the direction of the movement of the conveyor belt or belts. Such dough divider septa have the task to refrain the bulk mass above the space for the collection and formation of the continuous long loaf, thus preventing that the bulk mass, thrust by friction by the dough below, gathers above the outlet of the unit thus forming a block. In addition, still by refraining the dough above the collection space, they allow to create an empty zone under the bulk mass that facilitates the subsequent descent of the dough, thus preventing undesirable bridge effects.

These and other characteristics of the present invention will be made more evident from the following detailed description of an embodiment thereof that is illustrated as a non-limiting example in the enclosed drawings, in which:
Figure 1 shows a unit according to the invention in schematic longitudinal section with the cutting blade in set back position;
Figure 2 shows a similar view in longitudinal section with the cutting blade in advanced position;
Figures 3 and 4 show the same unit in top plan with the cutting blade in the positions of Figures 1 and 2;
Figure 5 shows the same unit in cross section according to the line V-V in Figure 1;
Figure 6 shows a similar unit according to the invention, as viewed in Figure 2, with a different driving mechanism of the cutting blade:

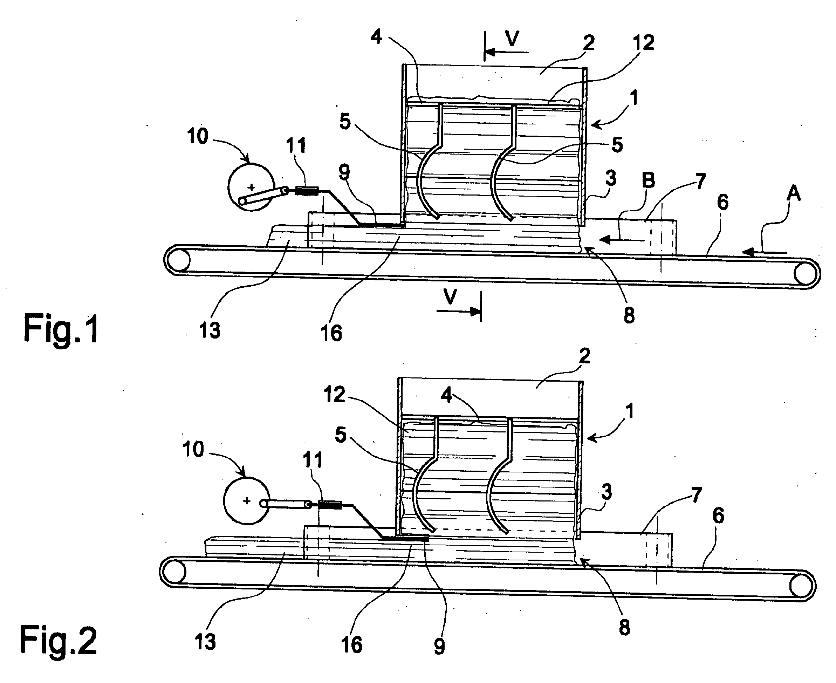

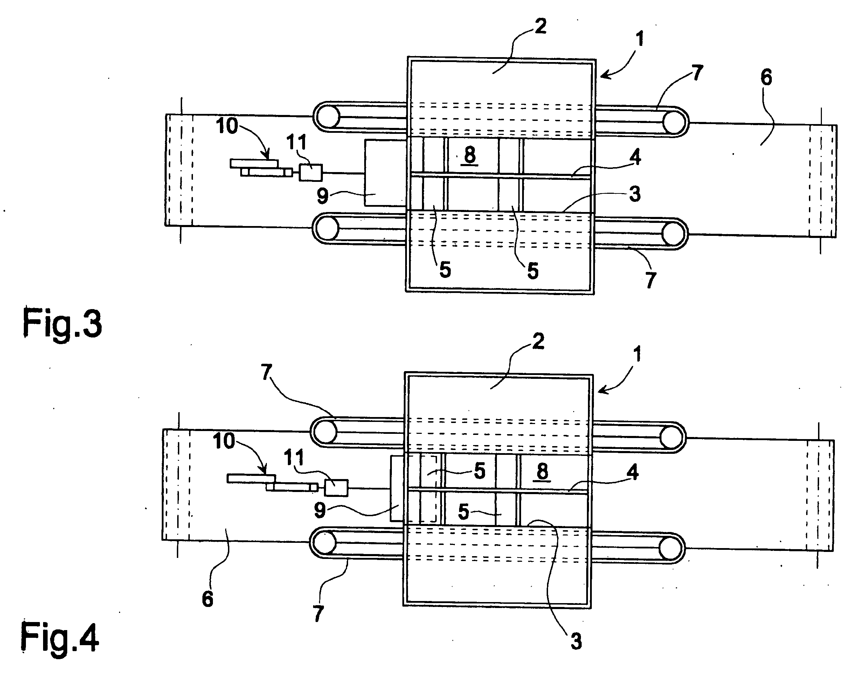

The unit shown in Figures 1-5 comprises a hopper 1 made up of a top part 2 with tapered wall and top mouth open and of a bottom part 3 with constant section communicating with the first one and with the bottom mouth open. Inside the hopper, hung to a fixed horizontal bar 4, two (or more) dividing septa 5 are arranged that follow one another from the right to the left if looking at Figures 1-4.

Under the hopper 1, at a variable prefixed distance from it, a horizontal conveyor belt 6 is arranged, that together with a pair of vertical side conveyor belts 7 defines a rectangular space 8.

The conveyor belts 6 and 7 are provided with continuous movement with equal speed, constant but variable, in the direction of the arrows A and B, that is from the right to the left when looking at Figures 1-4.

Immediately under the hopper 1, at its left end when looking at Figures 1-4, a cutting blade 9 is arranged that is provided with an alternated horizontal movement controlled by a crank-work 10 and guided by a guide 11 (Figures 1 and 2). The advancement speed of the blade 9 is equal to the return one of the same blade.

During operation, the hopper 1 gets loaded with a bulk mass of bread dough 12, that progressively descends along it until it drops in the collection space 8 beneath, where it settles so as to conform to the flat shape of the conveyor belts 6 and 7. From here the conveyor belts 6 and 7 convey it towards an outlet 16 of the space 8, where the cutting blade 9 is present, that by advancing toward the right cuts the dough under the hopper 1 and separates it from the bulk mass above it and by withdrawing towards the left accompanies the cut mass in its movement imposed by the conveyor belts 6 and 7 outside of the zone of the hopper 1. A continuous long loaf of bread dough 13 is thus formed that has a regular and uniform shape imposed by the conveyor belts 6 and 7 and by the participation of the cutting blade 9.

The dividing septa 5 operate as dough devider elements, in that they divide the bottom part of bulk mass 12 into several parts that are withheld against the displacement toward the left part of the hopper 1 due to the effect of the friction with the dough already collected in the space beneath 8 and biased to move by the conveyor belts 6 and 7. In addition undesirable bridge effects of the dough in the hopper 1 are prevented.

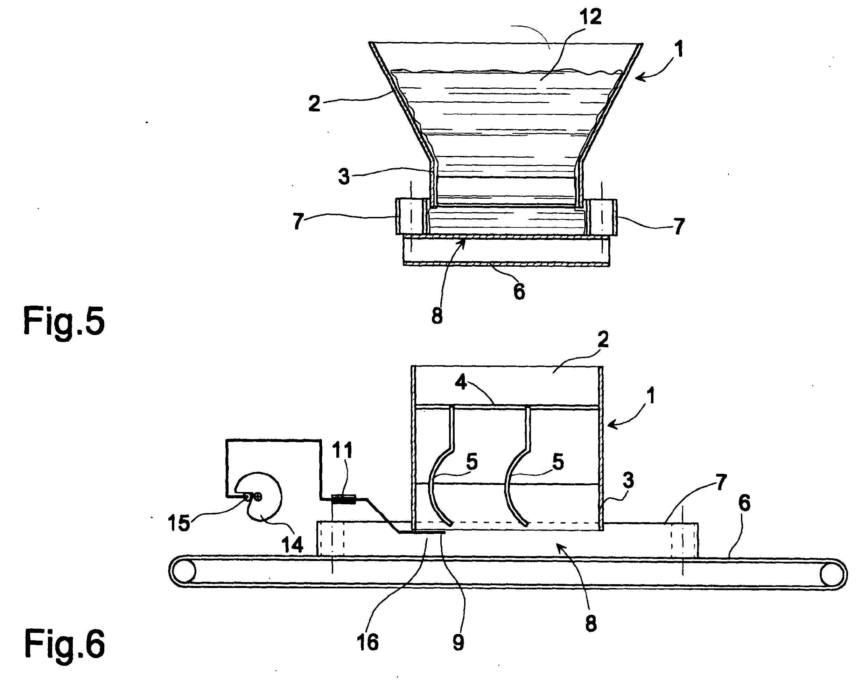

Figure 6 shows a variation of the unit in Figures 1-5, that differs from it in that the cutting blade 9 is controlled by a cam 14 against which a cam follower 15 is elastically biased. The cam 14 is conformed so as to impose to the blade 9 a quick advancement movement for the cutting of the dough and a slow return movement in order to accompany the cut dough in its exit movement from the collection space 8.

## Claims

1. Unit for the formation of a continuous regular and uniform long loaf of bread dough, comprising a hopper (1) for the containment of a bulk mass of bread dough (12) and a collection space (8) beneath with a horizontal conveyor belt (6) suitable to receive a long loaf of bread dough (13) descending from said hopper (1) and to convey it towards an outlet (16) of said collection space (8), and a flat horizontal cutting blade (9) arranged in correspondence with said outlet (16), **characterised in that** said horizontal conveyor belt (6) is flanked by two vertical side conveyor belts (7), that move in the same direction and at the same speed as the horizontal conveyor belt (6) and so define said collection space (8), and **in that** said cutting blade (9) is mobile parallel to said horizontal conveyor belt (6) in the conveying direction of said horizontal conveyor belt (6) and, alternately, in the opposite direction under at least one part of the hopper (1) in order to cut said long loaf of bread dough (13) at a predetermined top height thereof during movement in said opposite direction and then to remain in contact with the cut mass of said bread dough in order to accompany it in its movement towards the outlet (16) of said collection space (8) during movement of said cutting blade in said conveying direction.

2. Unit according to claim 1, **characterised in that** it comprises one or more dividing septa (5) arranged inside the hopper (1) in order to separate the bulk mass of dough (12) into several parts that follow one another in the direction of movement of said horizontal conveyor belt (6).

3. Unit according to claim 1, **characterised in that** said cutting blade (9) is provided with advancement and return movements with equal speed.

4. Unit according to claim 1, **characterised in that** said cutting blade (9) is provided with a fast advancement movement and a slow return movement.

## Patentansprüche

1. Einheit zur Bildung eines durchgehenden, regelmäßigen und gleichmäßigen Laibs aus Brotteig, welche einen Trichter (1) zur Aufnahme einer Hauptmasse des Brotteigs (12) und einen Sammelraum (8) darunter mit einem horizontalen Förderband (6) aufweist, welches einen länglichen Laib aus Brotteig (13) aufnehmen kann, wie er sich von dem Trichter (1) nach unten bewegt, und dieser zu einem Auslass (16) des Sammelraums (8) befördert wird, wobei ein ebenes, horizontales Schneidmesser (9) dem Auslass (16) zugeordnet vorgesehen ist, **dadurch gekennzeichnet, dass** das horizontale Förderband (6) durch zwei vertikale, seitliche Förderbänder (7) begrenzt wird, welche sich in dieselbe Richtung mit der selben Geschwindigkeit wie das horizontale Förderband (6) bewegen und somit den Sammelraum (8) begrenzen, und dass das Schneidmesser (9) parallel zum horizontalen Förderband (6) in Förderrichtung des horizontalen Förderbandes (6) beweglich ist und abwechselnd in Gegenrichtung unter wenigstens einen Teil des Trichters (1) beweglich ist, um den länglichen Laib aus Brotteig (13) nach einer vorbestimmten oberen Höhe hiervon während der Bewegung in die Gegenrichtung abzutrennen und dann in Kontakt mit der abgetrennten Masse aus Brotteig zu bleiben, um diese bei der Bewegung in Richtung des Auslasses (16) des Sammelraumes (8) während der Bewegung des Schneidmessers in Förderrichtung zu begleiten.

2. Einheit nach Anspruch 1, **dadurch gekennzeichnet, dass** sie ein oder mehrere unterteilte Räume (5) aufweist, welche in dem Trichter (1) angeordnet sind, um die Teigmasse (12) in einige Teile zu unterteilen, welche in Bewegungsrichtung des horizontalen Förderbandes (6) aufeinander folgen.

3. Einheit nach Anspruch 1, **dadurch gekennzeichnet, dass** das Schneidmesser (9) Vor- und Rücklaufbewegungen in gleicher Geschwindigkeit ausführt.

4. Einheit nach Anspruch 1, **dadurch gekennzeichnet, dass** das Schneidmesser (9) eine schnelle Vorlaufbewegung und eine langsame Rücklaufbewegung ausführt.

## Revendications

1. Unité pour former une longue bande uniforme et régulière continue de pâte à pain comprenant une trémie (1) pour contenir une grosse masse de pâte à pain (12) et un espace de collecte (8) au-dessous avec une courroie de transport horizontale (6) appropriée pour recevoir une longue bande de pâte à pain (13) descendant de ladite trémie (1) et pour la transporter vers une sortie (16) dudit espace de collecte (8), et une lame de coupe (9) horizontale plate agencée en correspondance avec ladite sortie (16), **caractérisée en ce que** ladite courroie de transport horizontale (6) est flanquée de deux courroies de transport latérales verticales (7), qui se déplacent dans la même direction et à la même vitesse que la courroie de transport horizontale (6) et qui définissent ainsi ledit espace de collecte (8), et **en ce que** ladite lame de coupe (9) est mobile parallèlement à ladite courroie de transport horizontale (6) dans la direction de transport de ladite courroie de transport horizontale (6) et, alternativement, dans la direction opposée sous au moins une partie de la trémie (1) afin de couper ladite longue bande de pâte à pain (13) à une hauteur maximum prédéterminée de celle-ci pendant le déplacement dans ladite direction opposée et ensuite de rester en contact avec la masse coupée de ladite pâte à pain afin de l'accompagner dans son déplacement vers la sortie (16) dudit espace de collecte (8) pendant le déplacement de ladite lame de coupe dans ladite direction de transport.

2. Unité selon la revendication 1, **caractérisée en ce qu'**elle comprend une ou plusieurs cloisons de division (5) agencées à l'intérieur de la trémie (1) afin de séparer la grosse masse de pâte (12) en plusieurs parties qui se suivent dans la direction de déplacement de ladite courroie de transport horizontale (6).

3. Unité selon la revendication 1, **caractérisée en ce que** ladite lame de coupe (9) est pourvue de déplacements d'avance et de retour ayant des vitesses identiques,

4. Unité selon la revendication 1, **caractérisée en ce que** ladite lame de coupe (9) est pourvue d'un déplacement d'avance rapide et d'un déplacement de retour lent.
